# EUROPÄISCHE PATENTSCHRIFT

(11) **EP 1 048 856 B1**
(45) Veröffentlichungstag und Bekanntmachung des Hinweises auf die Patenterteilung: **06.10.2004**
(21) Anmeldenummer: 00810334.3
(22) Anmeldetag: 18.04.2000
(51) Int. Cl.: F16B 13/04

(54) **Befestigungselement zur Befestigung von Isolierelementen**
Element for fastening insulating elements
Elément de fixation d'éléments d'isolation

(30) Priorität: 26.04.1999 DE 19918782
(43) Veröffentlichungstag der Anmeldung: 02.11.2000
(73) Patentinhaber: HILTI Aktiengesellschaft, 9494 Schaan (LI)
(72) Erfinder: Bisping, Heinz, 86163 Augsburg (DE); Belz, Thomas, 80689 München (DE); Hausner, Wolfgang, 86859 Igling (DE); Daigeler, Erich, 86875 Waal (DE)
(74) Vertreter: Wildi, Roland

(56) Entgegenhaltungen:
- EP-A- 0 846 878
- DE-A- 2 850 123
- DE-U- 9 103 388

## Beschreibung

Die Erfindung betrifft ein Befestigungselement zur Befestigung von plattenförmigem Isolationsmaterial gemäss dem Obergriff des Patentanspruchs 1.

Zur Wärmeisolation und teilweise auch zur Schallisolation von Wänden und Decken werden plattenförmige Isolationsmaterialien, beispielsweise Dämmstoffplatten, eingesetzt. Die Isolationsmaterialien werden dabei üblicherweise an der noch unverputzten Mauer befestigt. Zur Befestigung der plattenförmigen Isolationsmaterialien kommen Befestigungselemente zum Einsatz, die einen grossflächigen, flachen Anpressteller und einen davon abragenden Schaft aufweisen, der in das Isolationsmaterial gesteckt wird. Die Verankerung in der Mauer erfolgt meist über dübelartige oder nagelähnliche Verankerungsteile, die sich in Verlängerung des vom Anpresstellers abragenden Schafts erstrecken. Die dübelartigen Verankerungsteile werden in vorgebohrte Bohrlöcher in der Mauer eingesteckt und durch Verspreizen verankert. Nagelartige Verankerungsteile werden ohne die Erstellung einer Bohrung unmittelbar in den Untergrund eingetrieben. Eine Durchgangsbohrung, die sich durch den zylindrischen Fortsatz erstreckt und am Anpressteller mündet, gewährleistet den Zugang zu einer Spreizschraube oder dergleichen Spreizkörper für das dübelartige Verankerungsteil bzw. zu einem nagelartigen Verankerungsteil. Nachdem die Mauer mit dem plattenförmigen Isolationsmaterial verkleidet ist, wird der Verputz aufgebracht.

Aus der DE-U-91 03 388 ist ein gattungsgemässes Befestigungselement für plattenförmige Isolationsmaterialien bekannt. Für die vom Anpressteller her zugängige Durchgangsbohrung ist ein Verschlusselement vorgesehen, um zu verhindern, dass der Verputz in die Durchgangsbohrung gelangt. Neben anderen Verschlusselementen ist in der Druckschrift auch ein stopfenartiger Verschlusskörper gezeigt, der nach dem Einstecken formschlüssig in einer Ringnut am Grund der erweiterten Durchgangsbohrung gehalten ist.

Der Verschlusskörper kann kappenförmig mit einem zylindrischen Bereich ausgebildet sein, der nach dem Einstecken den Kopf der in der Durchgangsbohrung befindlichen Schraube umgreift. Nachteilig an diesem bekannten Befestigungselement für plattenförmige Isolationsmaterialien ist, dass der Verschlussstopfen über eine dünne Lasche mit dem Anpressteller verbunden ist. Bei der Montage ist der Verschlussstopfen vielfach im Weg und muss vom Montagepersonal von der Mündung der Durchgangsbohrung weggehalten, bzw. weggeschwenkt werden. Bei der Lagerung ist eine grosse Anzahl von Befestigungselementen ungeordnet innerhalb eines Behältnisses untergebracht. Die an der Lasche befestigten Verschlusselemente können miteinander oder an den Anpresstellern verhaken. Beim Umschütten des Behältnisses, beispielsweise in ein Transportbehältnis, oder bei der Entnahme von Befestigungselementen kann es vorkommen, dass eine Lasche abgerissen wird. Dies führt dazu, dass einzelne Befestigungselemente ohne Verschlusselement vorliegen und dadurch die Durchgangsbohrung nicht mehr ordnungsgemäss verschlossen werden kann. Werden die Verschlusselemente als separate Teile zur Verfügung gestellt, ist ein höherer logistischer Aufwand insbesondere am Verwendungsort erforderlich.

Aufgabe der vorliegenden Erfindung ist es daher, diesen Nachteilen der Befestigungselemente des Stands der Technik abzuhelfen. Es soll ein Befestigungselement für plattenförmiges Isolationsmaterial geschaffen werden, welches einfach und zuverlässig handhabbar ist. Die Mündung der Durchgangsbohrung im Anpressteller soll möglichst dicht verschliessbar sein, um eine Dampfsperre zu schaffen und das Eindringen von Feuchtigkeit in die Durchgangsbohrung zu verhindern. Dabei soll die Handhabung des Verschlusselements vereinfacht sein. Ein Verhaken und Abreissen der Verschlusselemente von den Anpresstellern soll verhindert werden.

Die Lösung dieser Aufgaben besteht in einem Befestigungselement für plattenförmiges Isolationsmaterial mit den im kennzeichnenden Abschnitt des Patentanspruchs 1 angeführten Merkmalen. Das erfindungsgemässe Befestigungselement umfasst einen grossflächigen Anpressteller und einen davon abragenden Hohlschaft, dessen Durchgangsbohrung am Anpressteller mündet. Der Hohlschaft ist zur Aufnahme eines Spreizkörpers für ein Verankerungsteil ausgebildet, welches sich in axialer Richtung des Schafts erstreckt. Die Durchgangsbohrung ist mit einem Verschlussteil verschliessbar, das über eine Lasche am Anpressteller befestigt und von der Seite des Anpresstellers her in die Durchgangsbohrung einsteckbar ist. Das Verschlussteil ist stopfenartig ausgebildet und weist einen Einsteckabschnitt mit einer zylindrischen Dichtfläche auf, die im eingesteckten Zustand mit der Wandung der Durchgangsbohrung dichtend zusammenwirkt und kraftschlüssig in der Durchgangsbohrung gehalten ist. Am Einsteckabschnitt ist wenigstens eine mit einer Hinterschneidung versehene Ausnehmung vorgesehen, deren grösste Weite auf den Durchmesser des Schaftes des Spreizteils abgestimmt ist, um ein Aufclipsen des Verschlussteils auf den Schaft des Spreizteils zu ermöglichen.

Die mit der Wandung der Durchgangsbohrung zusammenwirkende, zylindrische Dichtfläche des Einsteckabschnitts des Verschlussteils gewährleistet einen dichten Abschluss der Durchgangsbohrung nach aussen. Dadurch ist eine wirkungsvolle Dampfsperre errichtet und das Eindringen von Feuchtigkeit in den Hohlschaft ist verhindert. Dies erlaubt es, das Befestigungselement in Verbindung mit Spreizkörpern zu verwenden, die nicht aus rostfreiem Stahl gefertigt sind bzw. keine korrosionsbeständige Beschichtung aufweisen. Indem am Einsteckabschnitt wenigstens eine hinterschnittene Ausnehmung angebracht ist, kann das Verschlussteil bereits bei der Vormontage des Befestigungselements auf den Schaft des Spreizkörpers aufgeclipst werden. Durch die definierte Lage der Verschlussteils ist ein Verhaken unterbunden und die Laschen können nicht mehr abgerissen werden. Die Handhabung des Befestigungselements ist vereinfacht, da das Verschlussteil zur Montage nicht mehr von der Mündung der Durchgangsbohrung im Anpressteller weggebogen werden muss.

Für eine einfache Aufclipsbarkeit und um einen zuverlässigen Halt des Verschlussteils am Schaft zu gewährleisten, der aber wieder relativ einfach lösbar ist, erweist es sich von Vorteil, wenn die Ausnehmung teilkreisförmig ausgebildet ist und eine Umfangskontur aufweist, die sich über etwa 185° bis etwa 330° erstreckt.

Unabhängig von der eigentlichen Form der Ausnehmung im Einsteckabschnitt erweist sich eine Hinterschnittiefe als zweckmässig, die etwa 10% bis etwa 45% der grössten Weite der Ausnehmung beträgt.

Um eine sehr gute und zuverlässige Dichtfunktion des Verschlussteils zu gewährleisten, beträgt die axiale Erstreckung der Dichtfläche wenigstens 50% der axialen Gesamtlänge des Einsteckabschnitts.

Zur Erleichterung des Einsteckens des Verschlussteils in die Mündung der Durchgangsbohrung schliesst an den die zylindrische Dichtfläche tragenden Bereich des Einsteckabschnitts ein Einführbereich an, der vorzugsweise konisch ausgebildet ist und gegenüber der axialen Erstreckung um einen Winkel von etwa 5° bis etwa 30° geneigt ist.

Aus fertigungstechnischen Gründen und um Material zu sparen, ist der Einsteckabschnitt röhrenförmig ausgebildet. Das Befestigungselement ist üblicherweise aus Kunststoff gefertigt und in einem Spritzgiessprozess hergestellt. Um bei der röhrenförmigen Ausbildung des mit einem konischen Einführbereich versehenen Einsteckabschnitts den Kern einfach entformen zu können, ist der konische Einführbereich mit in axialer Richtung verlaufenden Schlitzen versehen.

Zur Vereinfachung der Aufclipsbarkeit des Verschlussteils auf den Schaft des Spreizkörpers weist der Einsteckabschnitt zwei hinterschnittene Ausnehmungen auf, die einander diametral gegenüberliegen.

Indem der Spreizkörper einen als Senkkopf ausgebildeten Kopf aufweist, dessen zum Schaft geneigte Fläche mit dem Schaft einen Neigungswinkel einschliesst, der etwa 105° bis etwa 170° beträgt, löst sich das Verschlussteil beim Eintreiben des Spreizkörpers in die Durchgangsbohrung selbsttätig vom Schaft. Der gegebenenfalls vorhandene konische Einführbereich unterstützt dabei eine selbsttätige, lagerichtige Ausrichtung des Verschlussteils an der Mündung der Durchgangsbohrung. Zum Verschliessen der Durchgangsbohrung muss der Verschlussteil nur mehr eingedrückt werden.

Das Verankerungsteil kann eine Dübelhülse und der Spreizkörper eine Spreizschraube, insbesondere eine Senkkopfschraube sein.

Im folgenden wird die Erfindung unter Bezugnahme auf in den Figuren dargestellte Ausführungsbeispiele näher erläutert. Es zeigen in schematischer Darstellung:
- Fig. 1: eine perspektivische Darstellung eines ersten Ausführungsbeispiels des Befestigungselements;
- Fig. 2 und 3: zwei Seitenansichten zur Erläuterung der Lösefunktion des Verschlussteils;
- Fig. 4: eine Schnittdarstellung eines zweiten Ausführungsbeispiels des Befestigungselements; und
- Fig. 5: eine Schnittdarstellung des gegenüber Fig. 4 um 90° gedrehten Verschlussteils.

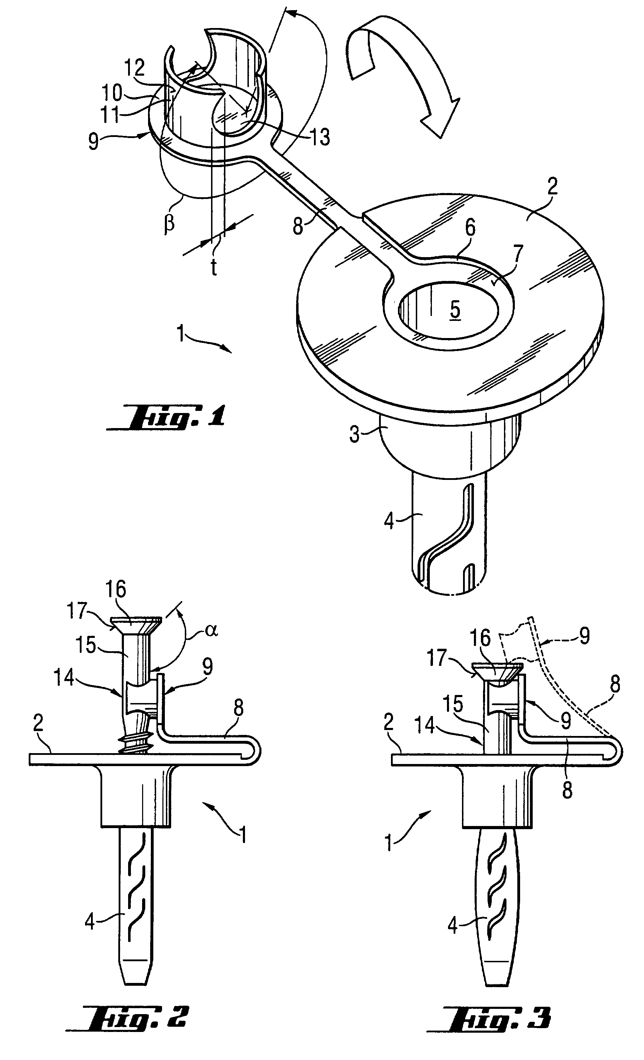

Das in Fig. 1 dargestellte erste Ausführungsbeispiel des Befestigungselements für plattenförmiges Isolationsmaterial, beispielsweise Dämmstoffplatten, ist gesamthaft mit dem Bezugszeichen 1 versehen. Es umfasst einen grossflächigen, relativ dünnen Anpressteller 2, von dem ein Hohlschaft 3 abragt. In Verlängerung des Hohlschafts 3 erstreckt sich ein Verankerungsteil 4, beispielsweise ein Dübel, der über einen nicht näher dargestellten Spreizkörper, beispielsweise eine Spreizschraube, radial aufweitbar ist. Das Verankerungsteil 4 wird durch eine Durchgangsbohrung 5 in den Hohlschaft 3 eingebracht, die am Anpressteller 2 einen im Durchmesser erweiterten Mündungsbereich 6 aufweist. Infolge der Erweiterung des Mündungsbereichs 6 ist die Durchgangsbohrung 5 von einer Auflagefläche 7 berandet.

Ein stopfenartig ausgebildetes Verschlussteil 9 für die Durchgangsbohrung 5 ist über eine Lasche 8 mit dem Anpressteller 2 verbunden. Der Verschlussstopfen 9 besitzt einen rohrartig ausgebildeten Einsteckabschnitt 11, der von einem flanschartig erweiterten Deckelteil 10 abragt. Der Aussendurchmesser des Deckelteils 10 ist dabei gleich oder geringfügig kleiner als der Durchmesser des erweiterten Mündungsbereichs 6 der Durchgangsbohrung. Bei in die Durchgangsbohrung 5 eingestecktem Verschlussteil 9 ist das Deckelteil 10 vollständig vom erweiterten Mündungsbereich 6 aufgenommen und stützt sich an der Auflagefläche 7 ab. Die Wandstärke des flanschartigen Deckelteils 10 ist dabei gleich oder geringfügig kleiner als die Tiefe des erweiterten Mündungsbereichs 6. Dadurch ist gewährleistet, dass bei eingestecktem Verschlussstopfen 9 das Deckelteil 10 nicht über die Oberfläche des Anpresstellers 2 ragt.

Der Einsteckabschnitt 11 weist eine zylindrische Dichtfläche 12 auf, die im eingesteckten Zustand dichtend mit der Wandung der Durchgangsbohrung 5 zusammenwirkt. Der Aussendurchmesser des die zylindrische Dichtfläche 12 tragenden Einsteckabschnitts 11 ist dabei derart bemessen, dass der Verschlussstopfen 9 kraftschlüssig in der Durchgangsbohrung 5 gehalten ist. Gemäss dem dargestellten Ausführungsbeispiel sind in der Wandung des Einsteckabschnitts 11 zwei hinterschnittene Ausnehmungen 13 vorgesehen, die einander diametral gegenüberliegen. Die Ausnehmungen 13 weisen eine Hinterschnittiefe t auf, die als Abstand von der Öffnungskante der Ausnehmung 13 bis zum Ort ihrer grössten Weite definiert ist und etwa 10% bis etwa 45% der grössten Weite der Ausnehmung 13 beträgt. Vorzugsweise ist die Ausnehmung, wie im Ausführungsbeispiel angedeutet, teilkreisförmig ausgebildet. Die Umfangskontur der teilkreisförmigen Ausnehmung 13 erstreckt sich dabei über einen Winkel β, der etwa 185° bis etwa 330° beträgt.

Fig. 2 und 3 zeigen die Funktion der hinterschnittenen Ausnehmung im Verschlussstopfen 9. Infolge der hinterschnittenen Ausnehmung ist der Verschlussstopfen 9 bereits bei der Vormontage des Befestigungselements 1 auf den Schaft 15 eines Spreizteils 14, beispielsweise einer Spreizschraube, aufclipsbar. Auf diese Weise ist der Verschlussstopfen 9 in einer definierten Position gehalten. Die Lasche 8, die den Verschlussstopfen 9 mit dem Anpressteller 2 verbindet, ist dabei unter einer geringen Vorspannung gehalten. Die Spreizschraube 14 besitzt einen Senkkopf 16, dessen zum Schaft 15 geneigte Fläche 17 mit dem Schaft 15 einen Winkel a einschliesst, der etwa 105° bis etwa 170° beträgt. Durch das Eindrehen der Spreizschraube 14 wird der Verschlussstopfen 9 entlang des Schaftes 15 in Richtung des Senkkopfes 16 geschoben, bis er an der geneigten Fläche 17 ansteht (Fig. 3). Beim weiteren Eindrehen der Spreizschraube 14 schiebt sich die geneigte Fläche 17 des Senkkopfes 16 in die hinterschnittene Ausnehmung und löst den Verschlussstopfen 9 vom Schaft 15. Der bereits gelöste Verschlussstopfen 9 ist in Fig. 3 strichliert angedeutet.

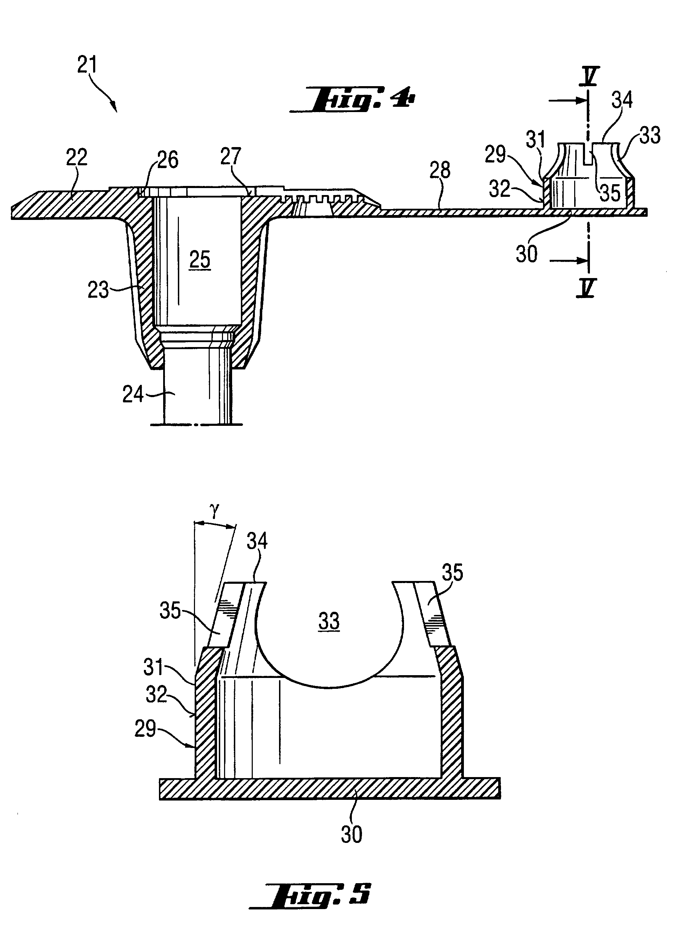

Das in Fig. 4 dargestellte zweite Ausführungsbeispiel des Befestigungselements für Dämmstoffplatten ist gesamthaft mit dem Bezugszeichen 21 versehen. Wie das anhand von Fig. 1 erläuterte Ausführungsbeispiel umfasst es einen grossflächigen, flachen Anpressteller 22, von dem ein Hohlschaft 23 abragt. Ein Verankerungsteil 24, beispielsweise ein Spreizdübel, ist im Hohlschaft 23 gehalten und erstreckt sich in dessen axialer Verlängerung. Der Spreizdübel 24 ist durch eine Durchgangsbohrung 25 in den Hohlschaft 23 eingesteckt. Die Durchgangsbohrung 25 mündet am Anpressteller 22 in einem im Durchmesser erweiterten Mündungsbereich 26 mit einer Auflagefläche 27. Ein Verschlussstopfen 29 ist über eine Lasche 28 mit dem Anpressteller 22 verbunden. Der Verschlussstopfen 29 besitzt einen rohrartigen Einsteckabschnitt 31, der von einem flanschartig erweiterten Deckelteil 30 abragt, dessen Aussendurchmesser und Wandstärke auf die Abmessungen des erweiterten Mündungsbereichs 26 der Durchgangsbohrung 25 abgestimmt sind. In der Oberfläche des Anpresstellers 22 ist eine etwa radial verlaufende Nut ausgespart, die bei eingestecktem Verschlussstopfen 29 die Lasche 28 aufnimmt. Ein Teil des Einsteckabschnitts 31 des Verschlussstopfens 29 trägt eine zylindrische Dichtfläche 32. An den die zylindrische Dichtfläche 32 aufweisendenTeil des Einsteckabschnitts 31 schliesst ein Einführbereich 34 an, der sich zu seinem freien Ende hin etwa konisch verjüngt. Im Einsteckabschnitt 31 des Verschlussstopfens 29 sind zwei hinterschnittene Ausnehmungen 33 vorgesehen, die einander diametral gegenüberliegend angeordnet sind. Der konische Einführbereich 34 des Verschlussstopfens 29 weist Schlitze 35 auf, die sich im wesentlichen in axiale Richtung erstrecken. Beispielsweise sind zwei axiale Schlitze 35 angeordnet, die einander gegenüberliegen.

Fig. 5 zeigt den Verschlussstopfen aus Fig. 4. Der Verschlussstopfen 29 weist im Einsteckabschnitt je zwei hinterschnittene Ausnehmungen 33 und zwei axiale Schlitze 35 auf, die einander paarweise gegenüberliegen. Dabei folgt in Umfangsrichtung jeweils auf eine hinterschnittene Ausnehmung 33 ein axialer Schlitz 35 usw. Die Anordnung ist derart gewählt, dass der Winkelabstand des Zentrums einer hinterschnittenen Ausnehmung 33 von einem in Umfangsrichtung benachbarten axialen Schlitz 35 etwa 90° beträgt. Der an den zylindrischen Teil 32 des Einsteckabschnitts 31 anschliessende konische Einführbereich 34 schliesst mit der axialen Erstreckung des Einsteckabschnitts 31 einen Winkel γ ein, der etwa 5° bis etwa 30° beträgt. Bei dem gewählten Neigungswinkel y ist in Verbindung mit dem Neigungswinkel der schrägen Fläche einer Senkkopfschraube das Lösen des auf den Schaft aufgeclipsten Verschlussstopfens beim Eindrehen der Schraube erleichtert.

## Patentansprüche

1. Befestigungselement für plattenförmiges Isolationsmaterial mit einem grossflächigen Anpressteller (2; 22) und einem davon abragenden Hohlschaft (3; 23), dessen Durchgangsbohrung (5; 25) am Anpressteller (2; 22) mündet und zur Aufnahme eines Spreizkörpers (14) für ein Verankerungsteil (4; 24) ausgebildet ist, welches sich in axialer Richtung des Hohlschafts (3; 23) erstreckt, wobei die Durchgangsbohrung (5; 25) mit einem Verschlussteil (9; 29) verschliessbar ist, das über eine Lasche (8; 28) am Anpressteller (2; 22) befestigt und von der Seite des Anpresstellers (2; 22) her in die Durchgangsbohrung (5; 25) einsteckbar ist, wobei das Verschlussteil (9; 29) stopfenartig ausgebildet ist und einen Einsteckabschnitt (11; 31) mit einer zylindrischen Dichtfläche (12; 32) aufweist, die im eingesteckten Zustand mit der Wandung der Durchgangsbohrung (5; 25) dichtend zusammenwirkt und kraftschlüssig in der Durchgangsbohrung (5; 25) gehalten ist, **dadurch gekennzeichnet, dass** am Einsteckabschnitt (11; 31) wenigstens eine mit einer Hinterschneidung versehene Ausnehmung (13; 33) vorgesehen ist, deren grösste Weite auf den Durchmesser des Schaftes (15) des Spreizkörpers (14) abgestimmt ist, um ein Aufclipsen des Verschlussteils (9; 29) auf den Schaft (15) des Spreizkörpers (14) zu ermöglichen.

2. Befestigungselement nach Anspruch 1, **dadurch gekennzeichnet, dass** die Ausnehmung (13; 33) teilkreisförmig ausgebildet ist und eine Umfangskontur aufweist, die sich über einen Winkel (β) erstreckt, der etwa 185° bis etwa 330° erstreckt.

3. Befestigungselement nach Anspruch 1 oder 2, **dadurch gekennzeichnet, dass** die Ausnehmung (13; 33) eine Hinterschnittiefe (t) aufweist, die etwa 10% bis etwa 45% der grössten Weite der Ausnehmung (13; 33) beträgt.

4. Befestigungselement nach einem der vorangehenden Ansprüche, **dadurch gekennzeichnet, dass** die zylindrische Dichtfläche (12; 32) sich über wenigstens 50% der axialen Gesamtlänge des Einsteckabschnitts (11; 31) erstreckt.

5. Befestigungselement nach einem der vorangehenden Ansprüche, **dadurch gekennzeichnet, dass** an den die zylindrische Dichtfläche (32) tragenden Bereich des Einsteckabschnitts (31) ein Einführbereich (34) anschliesst, der vorzugsweise konisch ausgebildet ist und gegenüber der axialen Erstreckung des Einsteckabschnitts (31) um einen Winkel (γ) von etwa 5° bis etwa 30° geneigt ist.

6. Befestigungselement nach Anspruch 5, **dadurch gekennzeichnet, dass** der Einsteckabschnitt (11; 31) röhrenförmig ausgebildet ist.

7. Befestigungselement nach Anspruch 6, **dadurch gekennzeichnet, dass** der Einführbereich (34) konisch mit in axialer Richtung verlaufenden Schlitzen (35) ausgebildet ist.

8. Befestigungselement nach einem der vorangehenden Ansprüche, **dadurch gekennzeichnet, dass** der Einsteckabschnitt (11; 31) zwei hinterschnittene Ausnehmungen (13; 33) aufweist, die einander diametral gegenüberliegen.

## Claims

1. Fastening element for board-like insulating material, comprising a large-area pressure plate (2; 22) and a hollow shank (3; 23) projecting therefrom, the through bore (5; 25) of which opens on to the pressure plate (2; 22) and is designed to receive an expansion body (14) for an anchoring part (4; 24) extending in the axial direction of the hollow shank (3; 23), wherein the through bore (5; 25) can be closed by a closure part (9; 29) which is fastened to the pressure plate (2; 22) by means of a strap (8; 28) and can be inserted into the through bore (5; 25) from the pressure plate (2; 22) side, and wherein the closure part (9; 29) is plug-like and has a plug-in portion (11; 31) with a cylindrical sealing surface (12; 32) which cooperates in a sealing manner with the wall of the through bore (5; 25) and is held in a non-positive manner in the through bore (5; 25) in the inserted state, **characterised in that** at least one recess (13; 33) provided with an undercut is provided in the plug-in portion (11, 31), the largest width of the recess being adapted to the diameter of the shank (15) of the expansion body (14) in order to allow the closure part (9; 29) to be clipped on to the shank (15) of the expansion body (14).

2. Fastening element according to claim 1, **characterised in that** the recess (13; 33) is arcuate and has a circumferential contour extending over an angle (β) of approximately 185° to approximately 330°.

3. Fastening element according to claim 1 or claim 2, **characterised in that** the recess (13; 33) has an undercut depth (t) which is approximately 10 % to approximately 45 % of the largest width of the recess (13; 33).

4. Fastening element according to one of the preceding claims, **characterised in that** the cylindrical sealing surface (12; 32) extends over at least 50 % of the total axial length of the plug-in portion (11; 31).

5. Fastening element according to one of the preceding claims, **characterised in that** a preferably conical insertion region (34) adjoins the region of the plug-in portion (31) provided with the cylindrical sealing surface (32) and is inclined at an angle (γ) of approximately 5° to approximately 30° relative to the axial extent of the plug-in portion (31).

6. Fastening element according to claim 5, **characterised in that** the plug-in portion (11; 31) is tubular.

7. Fastening element according to claim 6, **characterised in that** the insertion region (34) is conical with slots (35) extending in the axial direction.

8. Fastening element according to one of the preceding claims, **characterised in that** the plug-in portion (11; 31) has two undercut recesses (13; 33) situated diametrically opposite one another.

## Revendications

1. Élément de fixation pour matériau isolant en forme de panneau, avec un plateau presseur à grande surface (2 ; 22) et, dépassant de celui-ci, une tige creuse (3 ; 23) dont le trou débouchant (5, 25) aboutit au niveau du plateau presseur (2 ; 22) et est conformé pour recevoir un corps d'expansion (14) pour la partie d'ancrage (4 ; 24), laquelle s'étend dans la direction axiale de la tige creuse (3 ; 23), le trou débouchant (5 ; 25) pouvant être obturé par une pièce de fermeture (9, 29) qui est fixée au plateau presseur (2 ; 22) par l'intermédiaire d'une languette (8 ; 28) et peut être insérée dans le trou débouchant (5 ; 25) à partir du côté du plateau presseur (2 ; 22), la pièce de fermeture (9 ; 29) étant conformée en bouchon et comportant une portion d'insertion (11 ; 31) avec une surface d'étanchéité cylindrique (12 ; 32) qui, en position insérée, coopère à l'étanchéité avec la paroi du trou débouchant (5 ; 25) et est maintenue dans le trou débouchant (5 ; 25) par conjugaison de forces, **caractérisé en ce que** sur la portion d'insertion (11 ; 31) est prévu au moins un évidement (13 ; 33) qui est pourvu d'une contre-dépouille et dont la largeur maximale est adaptée au diamètre de la tige (15) du corps d'expansion (14) afin de permettre un clipsage de la pièce de fermeture (9 ; 29) sur la tige (15) du corps d'expansion (14).

2. Élément de fixation selon la revendication 1, **caractérisé en ce que** l'évidement (13 ; 33) est conformé en cercle partiel et présente un contour circonférentiel qui s'étend sur un angle (β), lequel est d'environ 185° à environ 330°.

3. Élément de fixation selon la revendication 1 ou 2, **caractérisé en ce que** l'évidement (13 ; 33) présente une profondeur de contre-dépouille (t) qui correspond à environ 10 % à environ 45 % de la largeur maximale de l'évidement (13 ; 33).

4. Élément de fixation selon une des revendications précédentes, **caractérisé en ce que** la surface d'étanchéité cylindrique (12 ; 32) s'étend sur au moins 50 % de la longueur axiale totale de la portion d'insertion (11 ; 31).

5. Élément de fixation selon une des revendications précédentes, **caractérisé en ce qu'**à la zone de la portion d'insertion (31) portant la surface d'étanchéité cylindrique (32) se raccorde une zone d'introduction (34) qui est de forme de préférence conique et est inclinée selon un angle (γ) d'environ 5° à environ 30° par rapport à l'extension axiale de la portion d'insertion (31).

6. Élément de fixation selon la revendication 5, **caractérisé en ce que** la portion d'insertion (11 ; 31) est de forme tubulaire.

7. Élément de fixation selon la revendication 6, **caractérisé en ce que** la zone d'introduction (34) est de forme conique avec des fentes (35) s'étendant dans la direction axiale.

8. Élément de fixation selon une des revendications précédentes, **caractérisé en ce que** la portion d'insertion (11 ; 31) comporte deux évidements en contre-dépouille (13 ; 33) qui sont diamétralement opposés.
